(19) Europäisches Patentamt / European Patent Office / Office européen des brevets

(11) **EP 4 733 026 A1**

(12) **EUROPEAN PATENT APPLICATION**
published in accordance with Art. 153(4) EPC

(43) Date of publication:
**29.04.2026 Bulletin 2026/18**

(21) Application number: **24826148.9**

(22) Date of filing: **30.05.2024**

(51) International Patent Classification (IPC):
**B29B 17/00** (2006.01)        **B29B 17/04** (2006.01)
**B29B 17/02** (2006.01)        **B29B 13/06** (2006.01)
**B29C 35/02** (2006.01)        **B29C 48/00** (2019.01)
**B29K 23/00** (2006.01)

(52) Cooperative Patent Classification (CPC):
Y02W 30/62

(86) International application number:
**PCT/KR2024/007375**

(87) International publication number:
**WO 2024/262826 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.06.2023 KR 20230081056**

(71) Applicant: **LG CHEM, LTD.**
**Seoul 07336 (KR)**

(72) Inventors:
• **KIM, Dodam**
 **Daejeon 34122 (KR)**

• **LIM, Yongchan**
 **Daejeon 34122 (KR)**
• **OH, Hyun Taek**
 **Daejeon 34122 (KR)**
• **LEE, Sangho**
 **Daejeon 34122 (KR)**
• **LEE, Sooyoung**
 **Daejeon 34122 (KR)**
• **KIM, Jae Young**
 **Daejeon 34122 (KR)**
• **HAN, Jungjin**
 **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR RECYCLING WASTE SILICONE CARTRIDGE**

(57) A method for recycling a waste silicone cartridge according to an exemplary embodiment of the present application comprises the steps of crushing a waste silicone cartridge containing high-density polyethylene (HDPE) and silicone sealant; subjecting the waste silicone cartridge to surface friction processing; and recovering the high-density polyethylene (HDPE) from the waste silicone cartridge, wherein the surface friction processing comprises: putting the crushed waste silicone cartridge into a drive part, and generating friction on a surface of the waste silicone cartridge using the drive part.

[Figure 1]

SILICONE CURING TREATMENT → CRUSHING → SURFACE FRICTION PROCESSING → WET SPECIFIC GRAVITY SEPARATION → DRYING → EXTRUSION

EP 4 733 026 A1

**EP 4 733 026 A1**

**Description**

[Technical Field]

The present application claims priority to and the benefit of Korean Patent Application No. 10-2023-0081056 filed in the Korean Intellectual Property Office on June 23, 2023, the entire contents of which are incorporated herein by reference.

The present invention relates to a method for recycling a waste silicone cartridge.

[Background Art]

Waste silicone cartridges are generated at construction sites. The waste silicone cartridge contains high-density polyethylene (HDPE) and silicone sealant, and the high-density polyethylene (HDPE) is a highly valuable material that can be used for various applications.

That is, a method for recycling a waste silicone cartridge refers to a method for obtaining high-density polyethylene (HDPE) from a waste silicone cartridge. However, there is a problem in recycling high-density polyethylene (HDPE) due to the silicone sealant with adhesiveness in the waste silicone cartridge. As a result, the waste silicone cartridges have been landfilled or incinerated rather than recycled.

Therefore, after separately recovering the waste silicone cartridge, a process of removing the silicone sealant is required.

However, the existing process consumes a lot of energy, and there has been a problem in that the impact strength and durability of high-density polyethylene (HDPE) obtained through the method for recycling a waste silicone cartridge are reduced due to foreign matters mixed in the process of recovering waste silicone cartridges.

Accordingly, there is a need for research on a method for recycling a waste silicone cartridge in which the energy used is not large and the impact strength and durability of high-density polyethylene (HDPE) obtained through the method are improved.

[Detailed Description of the Invention]

[Technical Problem]

The present invention is to provide a method for recycling a waste silicone cartridge that can reduce unnecessary energy consumption by using energy within a certain range in a surface friction processing step and increase the impact strength and durability of high-density polyethylene (HDPE) obtained through a method for recycling a waste silicone cartridge.

[Technical Solution]

An exemplary embodiment of the present invention provides a method for recycling a waste silicone cartridge, the method comprising: crushing a waste silicone cartridge containing high-density polyethylene (HDPE) and silicone sealant; subjecting the waste silicone cartridge to surface friction processing; and recovering the high-density polyethylene (HDPE) from the waste silicone cartridge, wherein the surface friction processing comprises: putting the crushed waste silicone cartridge into a drive part, and generating friction on a surface of the waste silicone cartridge using the drive part.

In addition, another exemplary embodiment of the present invention provides a recycled high-density polyethylene satisfying Formula 1.

$$[\text{Formula 1}]$$

$$X = (A \times 0.03) + (B \times 0.05) + (C \times 0.1) < 200$$

in Formula 1,

X is a foreign matter score of the recycled high-density polyethylene,
A is the number of foreign matters with a size of 100 $\mu$m or greater and less than 300 $\mu$m in the recycled high-density polyethylene,
B is the number of foreign matters with a size of 300 $\mu$m or greater and less than 500 $\mu$m in the recycled high-density polyethylene, and
C is the number of foreign matters with a size of 500 μm or greater in the recycled high-density polyethylene.

[Advantageous Effects]

The method for recycling a waste silicone cartridge according to an exemplary embodiment of the present invention has excellent energy efficiency.
The high-density polyethylene (HDPE) obtained through the method for recycling a waste silicone cartridge according to an exemplary embodiment of the present invention has excellent impact strength and durability.

[Brief Description of Drawings]

FIG. 1 schematically shows a sequence of a method for recycling a waste silicone cartridge according to an exemplary embodiment of the present invention.
FIG. 2 is a diagram showing before and after waste silicone cartridges are crushed.
FIG. 3 is a diagram showing a correlation between a total amount of energy applied to a waste silicone cartridge and a foreign matter score of recovered high-density polyethylene in Examples and Comparative Examples.
FIG. 4 is a diagram showing a correlation between a foreign matter score and an impact strength of recovered high-density polyethylene in Examples and Comparative Examples.
FIG. 5 is a diagram showing a correlation between a foreign matter score and an ESCR of recovered high-density polyethylene in Examples and Comparative Examples.

[Best Mode]

Hereinafter, the present specification will be described in more detail.
In the present specification, when a part is referred to as "comprising, comprising, or the like" a certain component, it means that the part can further comprise another component, not excluding another component, unless explicitly described to the contrary.
In the present specification, 'p to q' means a range of 'p or greater and q or less'.
In the present specification, 'waste silicone cartridge' is a material containing high-density polyethylene (HDPE) and silicone sealant, and a material to be obtained through a method for recycling a waste silicone cartridge is high-density polyethylene (HDPE).

<Method for recycling waste silicone cartridge>

A method for recycling a waste silicone cartridge according to an exemplary embodiment of the present invention comprises the steps of crushing a waste silicone cartridge containing high-density polyethylene (HDPE) and silicone sealant; subjecting the waste silicone cartridge to surface friction processing; and recovering the high-density polyethylene (HDPE) from the waste silicone cartridge, wherein the surface friction processing comprises: putting the crushed waste silicone cartridge into a drive part, and generating friction on a surface of the waste silicone cartridge using the drive part.
In an exemplary embodiment of the present invention, the waste silicone cartridge means a cartridge that was used as a packaging container of silicone sealant for construction or industrial use.
In an exemplary embodiment of the present invention, a total amount of energy applied to the waste silicone cartridge during the surface friction processing step may be 35 J/kg to 100 J/kg.
The present invention provides a method for recycling a waste silicone cartridge comprising the step of surface friction processing. More specifically, the present invention has a feature of obtaining high-density polyethylene (HDPE) with excellent impact strength and ESCR (environmental stress crack resistance) by applying a certain amount of energy per weight of a waste silicone cartridge during the surface friction processing.
Specifically, in an exemplary embodiment of the present invention, the step of surface friction processing may comprise steps of putting the crushed waste silicone cartridge into a drive part, and generating friction on a surface of the waste silicone cartridge using the drive part.
In this case, the step of generating friction on a surface of the waste silicone cartridge using the drive part may comprise steps of bringing the drive part into contact with the surface of the waste silicone cartridge, and rotating the drive part in a state in which the drive part is in contact with the surface of the waste silicone cartridge.
That is, frictional heat generated by mutual friction between the drive part and the crushed waste silicone cartridge can soften a portion of a workpiece around a tool, and plastic flow caused by the rotation of the drive part can modify the surface. That is, in the process of generating the friction, a certain amount of energy is applied to the waste silicone cartridge.

In an exemplary embodiment of the present invention, an amount of energy applied to the waste silicone cartridge due to the friction may be 35 J/kg to 100 J/kg, 40 J/kg to 100 J/kg, or 50 J/kg to 100 J/kg. In other words, the energy represents the amount of energy applied to the waste silicone cartridge through surface friction based on 1 kg of waste silicone cartridge that is a target of the surface friction. That is, the fact that the amount of energy applied to the waste silicone cartridge due to the friction is 35 J/kg means that when the surface friction processing is performed on 1 kg of waste silicone cartridge, the amount of energy applied to the waste silicone cartridge is 35 J.

Here, the drive part is comprised in surface friction processing equipment and corresponds to a part that accommodates the waste silicone cartridge and generates friction on the surface of the waste silicone cartridge. Additionally, in the present specification, the step of surface friction processing may use surface friction processing equipment commonly used in the relevant field. The step of surface friction processing refers to processing a target by using surface friction.

In an exemplary embodiment of the present invention, in the step of putting the crushed waste silicone cartridge into the drive part, the crushed waste silicone cartridge may be put into the drive part at a rate of 500 kg/hr to 1,500 kg/hr, preferably 550 kg/hr to 1,200 kg/hr.

In an exemplary embodiment of the present invention, in the step of crushing the waste silicone cartridge containing high-density polyethylene (HDPE) and silicone sealant, the waste silicone cartridge may be crushed into pieces of a size of 20 mm or less. Here, the size of the waste silicone cartridge refers to the longest length from one end to the other end of the waste silicone cartridge.

A method for crushing the waste silicone cartridge may be a method commonly used in the field, such as compression, impact, cutting, or impact cutting.

In an exemplary embodiment of the present invention, before the step of crushing the waste silicone cartridge containing high-density polyethylene (HDPE) and silicone sealant, a step of curing the silicone sealant of the waste silicone cartridge may be further comprised.

In an exemplary embodiment of the present invention, the step of curing the silicone sealant of the waste silicone cartridge may be performed through addition of a silicone curing agent, a UV (ultraviolet) treatment, or a heat treatment, but is not limited thereto, and various methods can be used as long as they do not affect a component of high-density polyethylene.

In an exemplary embodiment of the present invention, the step of recovering the high-density polyethylene (HDPE) from the waste silicone cartridge may comprise steps of putting the waste silicone cartridge into water to separate the waste silicone cartridge into high-density polyethylene (HDPE) and silicone sealant by wet specific gravity, recovering the high-density polyethylene (HDPE), and drying the high-density polyethylene. That is, the waste silicone cartridge containing high-density polyethylene (HDPE) and silicone sealant is crushed, and the crushed waste silicone cartridge is subjected to surface friction processing and then put into water to recover high-density polyethylene (HDPE) through wet specific gravity separation.

Specifically, when the waste silicone cartridge that has undergone the surface friction processing is put into water, the high-density polyethylene in the waste silicone cartridge floats on the water, and the silicone sealant sinks. That is, the high-density polyethylene is present in an upper part of water, and the silicone sealant is present in a lower part of water.

Subsequently, when the high-density polyethylene present in the upper part of water is recovered, the purpose of the method for recycling a waste silicone cartridge can be achieved.

The silicone sealant present, i.e., sunk in the lower part of water can be removed.

In other words, the method for recycling a waste silicone cartridge according to an exemplary embodiment of the present invention may further comprise a step of disposing the silicone sealant.

In an exemplary embodiment of the present invention, the step of disposing the silicone sealant may comprise steps of putting the waste silicone cartridge into water to separate the waste silicone cartridge into high-density polyethylene (HDPE) and silicone sealant by specific gravity, and recovering and disposing the silicone sealant.

In an exemplary embodiment of the present invention, the step of drying the high-density polyethylene may be performed at a temperature of 70°C to 90°C, and preferably 75°C to 85°C. Moisture of the recovered high-density polyethylene is removed through the step of drying the high-density polyethylene. By removing moisture, the efficiency of a subsequent step of extruding high-density polyethylene (HDPE) can be further increased.

In an exemplary embodiment of the present invention, a step of extruding the recovered high-density polyethylene (HDPE) may be further comprised. The extrusion can further facilitate the use of the high-density polyethylene as an actual product.

Specifically, in an exemplary embodiment of the present invention, in the step of extruding the recovered high-density polyethylene (HDPE), the high-density polyethylene (HDPE) may be extruded at a temperature of 190°C to 220°C.

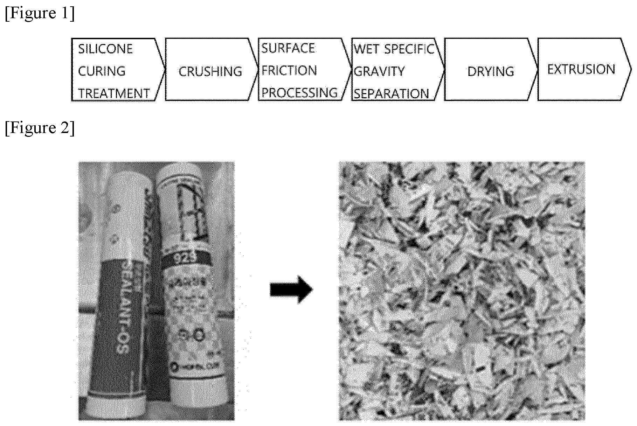

That is, the method for recycling a waste silicone cartridge according to an exemplary embodiment of the present invention may comprise processes of curing the silicone sealant of the waste silicone cartridge, crushing the cured waste silicone cartridge, subjecting the crushed waste silicone cartridge to surface friction processing, recovering high-density polyethylene through wet specific gravity separation of the waste silicone cartridge subjected to the surface friction processing, drying the recovered high-density polyethylene, and extruding the recovered high-density polyethylene, as shown in FIG. 1. In this case, it can be said that the process of crushing the waste silicone cartridge, subjecting the crushed waste silicone cartridge to surface friction processing, and recovering high-density polyethylene through wet specific gravity separation of the waste silicone cartridge subjected to the surface friction processing is a key process in the method for recycling a waste silicone cartridge.

<Recycled high-density polyethylene (HDPE)>

Another exemplary embodiment of the present invention provides a recycled high-density polyethylene satisfying Formula 1 below.

$$[\text{Formula 1}]$$

$$X = (A \times 0.03) + (B \times 0.05) + (C \times 0.1) < 200$$

in Formula 1 above,

X is a foreign matter score of the recycled high-density polyethylene,
A is the number of foreign matters with a size of 100 $\mu$m or greater and less than 300 $\mu$m in the recycled high-density polyethylene,
B is the number of foreign matters with a size of 300 $\mu$m or greater and less than 500 $\mu$m in the recycled high-density polyethylene, and
C is the number of foreign matters with a size of 500 $\mu$m or greater in the recycled high-density polyethylene.

The present inventors found that the larger foreign matters in the recycled high-density polyethylene (HDPE) can have an adverse effect on the Izod impact strength, environmental stress crack resistance (ESCR), and the like of high-density polyethylene (HDPE), and accordingly, set factors that can reflect the size of the foreign matter depending on the size of the foreign matter.
More specifically, the foreign matter score of the recycled high-density polyethylene (HDPE) can be measured based on the gel counter method using Collin's Q film software. Specifically, a sample was prepared by dry blending a new material for a silicone cartridge (product name: ME8000) and recycled high-density polyethylene at 9:1. Here, 9:1 refers to the weight ratio. Subsequently, after putting the sample into a gel counter, the number of foreign matters with a size of 100 $\mu$m or greater and less than 300 $\mu$m, the number of foreign matters with a size of 300 $\mu$m or greater and less than 500 $\mu$m, and the number of foreign matters with a size of 500 $\mu$m or greater were secured using the gel counter, and numerical values obtained by multiplying the number for each area by 0.03, 0.05, and 0.1 were scored as the foreign matter score. In the present specification, the lower the foreign matter score, the better the quality of the recycled high-density polyethylene.
In an exemplary embodiment of the present invention, the foreign matter score of the recycled high-density polyethylene may be less than 200, 150 or less, or 100 or less. When the foreign matter score is 200 or greater, foreign matters are excessively present in the recycled high-density polyethylene, so the corresponding high-density polyethylene cannot be applied as a recycled product. In addition, when the foreign matter score of the recycled high-density polyethylene is less than 200, problems during extrusion processing due to foreign matters may not occur, deterioration of physical properties in a finished product can be prevented when applied as a PCR (Post-Consumer Recycled) cartridge product, and thermal stability and exterior color characteristics can be improved.
In an exemplary embodiment of the present invention, the recycled high-density polyethylene (HDPE) has an Izod impact strength of 2.5 kg·cm/cm to 8 kg·cm/cm, and preferably 2.5 kg·cm/cm to 7 kg·cm/cm. The Izod impact strength may be measured by a method in accordance with ASTM D256.
In an exemplary embodiment of the present invention, the recycled high-density polyethylene (HDPE) may have an environmental stress crack resistance (ESCR) of 0.6 hr to 5 hr, and preferably 1.0 hr to 3.5 hr. The ESCR may be measured by a method in accordance with ASTM D1693.
In an exemplary embodiment of the present invention, the recycled high-density polyethylene may be derived from the waste silicone cartridge. Therefore, the recycled high-density polyethylene may be high-density polyethylene recovered according to the above-described method for recycling a waste silicone cartridge.
Below, Examples will be described in detail to specifically describe the present invention. However, the Examples according to the present invention may be modified in other forms, and the scope of the present invention is not construed as being limited to the following Examples. The Examples of the present invention are provided to more completely explain the present invention to one skilled in the art.

<Example 1>

Waste silicone cartridges were recovered from construction sites, etc. After curing the silicone component of the recovered waste silicone cartridges, the waste silicone cartridges were crushed into pieces of a size of 20 mm or less.

FIG. 2 shows before and after waste silicone cartridges are crushed. As shown in FIG. 2, the recovered waste silicone cartridges can be crushed into pieces of a size of 20 mm or less.

The crushed waste silicone cartridges were put into a drive part of a surface friction processing device at a rate of 900 kg/hr. The surface friction processing device comprises a motor that rotates the drive part. Next, the surface friction processing was performed while rotating the drive part in a state in which the input waste silicone cartridges were brought into contact with the drive part.

After the surface friction processing was completed, the waste silicone cartridges were put into water.

At this time, the amount of energy applied to the waste silicone cartridges after the waste silicone cartridges were put into the drive part of the surface friction processing device until the surface friction processing was completed was 42.4 J/kg.

After the waste silicone cartridges subjected to the surface friction processing were put into water, high-density polyethylene (HDPE) floating on the water was recovered, and the silicone sealant that had sunk under the water was recovered and disposed. That is, the high-density polyethylene (HDPE) and silicone sealant in the waste silicone cartridges were separated through wet specific gravity separation.

The foreign matter score, Izod impact strength, and ESCR of the recovered high-density polyethylene (HDPE) were then measured.

At this time, as described above, for the foreign matter score, after a sample was prepared by dry blending a new material for a silicone cartridge (product name: ME8000) and recovered high-density polyethylene at 9:1, the number of foreign matters with a size of 100 $\mu$m or greater and less than 300 $\mu$m, the number of foreign matters with a size of 300 $\mu$m or greater and less than 500 $\mu$m, and the number of foreign matters with a size of 500 $\mu$m or greater were secured using the gel counter, and numerical values obtained by multiplying the number for each area by 0.03, 0.05, and 0.1 were scored as the foreign matter score.

In addition, the Izod impact strength and ESCR were measured by the methods in accordance with ASTM D256 and ASTM D1693, respectively.

The results are shown in Table 1 below.

<Comparative Example 1>

The waste silicone cartridges were crushed in the same manner as in Example 1.

Next, unlike in Example 1, without performing surface friction processing, the crushed waste silicone cartridges were put into water, and high-density polyethylene (HDPE) was recovered in the same manner as in Example 1.

Next, the foreign matter score, Izod impact strength, and ESCR of the recovered high-density polyethylene (HDPE) of Comparative Example 1 were measured in the same manner as Example 1.

**<Examples 2 to 10 and Comparative Examples 2 to 6>**

High-density polyethylene (HDPE) was recovered in the same manner as in Example 1, except that the amount of energy applied to the waste silicone cartridges in Example 1 was changed as shown in Table 1 (Examples 2 to 10 and Comparative Examples 2 to 6).

For Examples 2 to 10 and Comparative Examples 2 to 6, the foreign matter score, Izod impact strength and ESCR of the recovered high-density polyethylene (HDPE) of Examples 2 to 10 and Comparative Examples 2 to 6 were measured in the same manner as in Example 1, and the results are shown in Table 1 below.

Table 1

| | Whether surface friction processing was performed | Energy (J/Kg) | Foreign matter score (points) | Izod impact strength (kg·cm/cm) | ESCR (hr) |
|---|---|---|---|---|---|
| Example 1 | O | 38.0 | 99 | 2.7 | 1 |
| Example 2 | O | 42.4 | 97 | 2.9 | 1.5 |

(continued)

| | Whether surface friction processing was performed | Energy (J/Kg) | Foreign matter score (points) | Izod impact strength (kg·cm/cm) | ESCR (hr) |
|---|---|---|---|---|---|
| Example 3 | O | 46.2 | 100 | 2.8 | 1.5 |
| Example 4 | O | 54.7 | 78 | 3.2 | 2 |
| Example 5 | O | 58.6 | 52 | 3.7 | 2 |
| Example 6 | O | 71.1 | 53 | 4.8 | 2 |
| Example 7 | O | 73.5 | 53 | 4.9 | 2.5 |
| Example 8 | O | 79.3 | 49 | 5.4 | 2.5 |
| Example 9 | O | 92.3 | 36 | 6.1 | 3 |
| Example 10 | O | 95.8 | 36 | 6.3 | 3 |
| Comparative Example 1 | X | - | 728 | 0.4 | 0.5 |
| Comparative Example 2 | O | 19.2 | 531 | 1.8 | 0.5 |
| Comparative Example 3 | O | 24.6 | 476 | 2.1 | 0.5 |
| Comparative Example 4 | O | 30.8 | 421 | 2.2 | 0.5 |
| Comparative Example 5 | O | 101.2 | 287 | 1.4 | 0.5 |
| Comparative Example 6 | O | 113.5 | - | - | - |

In Table 1, energy refers to the total amount of energy applied to the waste silicone cartridges during the step of surface friction processing.

Comparing the results of Comparative Example 1 with the other Examples and Comparative Examples, it could be confirmed that the quality of the recovered high-density polyethylene (HDPE) was excellent when the step of surface friction processing was performed. In Comparative Example 6, it was impossible to measure the quality of the recovered high-density polyethylene (HDPE).

In addition, from the results of Comparative Examples 2 to 6 and Examples 1 to 10, it could be confirmed that the method for recycling a waste silicone cartridge according to the present invention applies a certain amount of energy per weight to the waste silicone cartridge during the step of surface friction processing, resulting in the excellent foreign matter score, impact strength, and ESCR (environmental stress crack resistance) of the recovered high-density polyethylene (HDPE).

This is believed to be because the surface friction processing proceeds most efficiently by satisfying the above energy range.

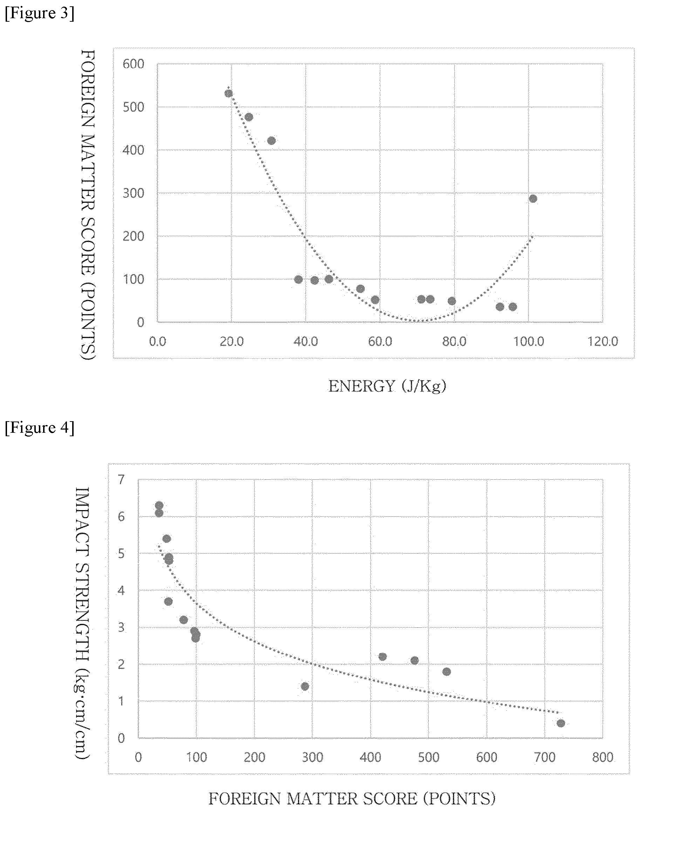

Additionally, FIG. 3 shows a correlation between a total amount of energy applied to a waste silicone cartridge and a foreign matter score of recovered high-density polyethylene in Examples and Comparative Examples. As shown in the results of FIG. 3, it can be confirmed that when the total amount of energy applied to the waste silicone cartridge during the step of surface friction processing is 35 J/kg to 100 J/kg, the foreign matter score can be minimized.

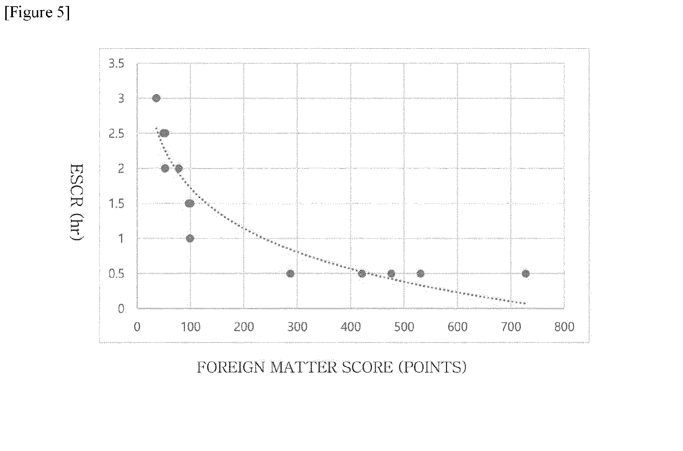

In addition, FIG. 4 shows a correlation between a foreign matter score and an impact strength of recovered high-density polyethylene in Examples and Comparative Examples. Additionally, FIG. 5 shows a correlation between a foreign matter score and an ESCR of recovered high-density polyethylene in Examples and Comparative Examples. As shown in the results of FIGS. 4 and 5, it can be confirmed that the impact strength and ESCR characteristics are excellent when the foreign matter score of the recovered high-density polyethylene is low.

**Claims**

1.   A method for recycling a waste silicone cartridge, the method comprising:

crushing the waste silicone cartridge comprising high-density polyethylene (HDPE) and silicone sealant;
subjecting the waste silicone cartridge to surface friction processing; and
recovering the high-density polyethylene (HDPE) from the waste silicone cartridge,
wherein the surface friction processing comprises putting the crushed waste silicone cartridge into a drive part, and generating friction on a surface of the waste silicone cartridge using the drive part.

2. The method of claim 1, wherein the waste silicone cartridge has been used as a packaging container for silicone sealant for construction or industrial use.

3. The method of claim 1, wherein a total amount of energy applied to the waste silicone cartridge during the surface friction processing is 35 J/kg to 100 J/kg.

4. The method of claim 1, wherein the generating friction on the surface of the waste silicone cartridge using the drive part comprises:

bringing the drive part into contact with the surface of the waste silicone cartridge; and
rotating the drive part in a state in which the drive part is in contact with the surface of the waste silicone cartridge.

5. The method of claim 1, wherein in the putting the crushed waste silicone cartridge into the drive part, the crushed waste silicone cartridge is put into the drive part at a rate of 500 kg/hr to 1,500 kg/hr.

6. The method of claim 1, wherein the recovering the high-density polyethylene from the waste silicone cartridge comprises:

putting the waste silicone cartridge into water to separate the waste silicone cartridge into high-density polyethylene and silicone sealant by specific gravity;
recovering the high-density polyethylene; and
drying the high-density polyethylene.

7. The method of claim 6, wherein in the drying the high-density polyethylene, the high-density polyethylene is dried at a temperature of 70°C to 90°C.

8. The method of claim 1, wherein in the crushing the waste silicone cartridge containing high-density polyethylene and silicone sealant, the waste silicone cartridge is crushed into pieces of a size of 20 mm or less.

9. The method of claim 1, further comprising curing the silicone sealant of the waste silicone cartridge before crushing the waste silicone cartridge containing high-density polyethylene and silicone sealant.

10. The method of claim 1, further comprising extruding the recovered high-density polyethylene.

11. The method of claim 10, wherein in the extruding the recovered high-density polyethylene, the high-density polyethylene is extruded at a temperature of 190°C to 220°C.

12. A recycled high-density polyethylene satisfying Formula 1:

[Formula 1]

$$X = (A \times 0.03) + (B \times 0.05) + (C \times 0.1) < 200$$

in Formula 1 above,

X is a foreign matter score of the recycled high-density polyethylene,
A is the number of foreign matters with a size of 100 $\mu$m or greater and less than 300 $\mu$m in the recycled high-density polyethylene,
B is the number of foreign matters with a size of 300 $\mu$m or greater and less than 500 $\mu$m in the recycled high-density polyethylene, and
C is the number of foreign matters with a size of 500 $\mu$m or greater in the recycled high-density polyethylene.

13. The recycled high-density polyethylene of claim 12, wherein the recycled high-density polyethylene has an Izod impact strength of 2.5 kg·cm/cm to 8 kg·cm/cm.

**14.** The recycled high-density polyethylene of claim 12, wherein the recycled high-density polyethylene has an environmental stress crack resistance (ESCR) of 0.6 hr to 5 hr.

**15.** The recycled high-density polyethylene of claim 12, wherein the recycled high-density polyethylene is derived from a waste silicone cartridge.

[Figure 1]

[Figure 2]

[Figure 3]

[Figure 4]

[Figure 5]

FOREIGN MATTER SCORE (POINTS)

## INTERNATIONAL SEARCH REPORT

| | International application No. |
|---|---|
| | **PCT/KR2024/007375** |

| | |
|---|---|
| **A. CLASSIFICATION OF SUBJECT MATTER** | |

**B29B 17/00**(2006.01)i; **B29B 17/04**(2006.01)i; **B29B 17/02**(2006.01)i; **B29B 13/06**(2006.01)i; **B29C 35/02**(2006.01)i; **B29C 48/00**(2019.01)i; B29K 23/00(2006.01)n

According to International Patent Classification (IPC) or to both national classification and IPC

**B. FIELDS SEARCHED**

Minimum documentation searched (classification system followed by classification symbols)

B29B 17/00(2006.01); B09B 3/00(2006.01); B29B 17/02(2006.01); B29C 49/22(2006.01); B32B 27/00(2006.01); B32B 7/12(2006.01); B65D 1/02(2006.01); C08J 11/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고밀도 폴리에틸렌(high density polyethylene, HDPE), 실리콘(silicon), 실란트(sealant), 분리(separation), 마찰(friction)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0004852 A (THE UNIVERSITY OF SYDNEY) 06 January 2023 (2023-01-06) <br> See claims 1-5; paragraphs [0058]-[0063]; and figure 2. | 1-15 |
| Y | KR 10-2009-0117717 A (DOW CORNING CORPORATION) 12 November 2009 (2009-11-12) <br> See claim 1; and paragraphs [0010], [0017] and [0053]. | 1-15 |
| A | JP 7215625 B1 (TOYO INK SC HOLDINGS CO., LTD.) 31 January 2023 (2023-01-31) <br> See claims 1-17. | 1-15 |
| A | JP 6879326 B2 (DAINIPPON PRINTING CO., LTD.) 02 June 2021 (2021-06-02) <br> See claims 1-3. | 1-15 |
| A | KR 10-0981851 B1 (KOREA ELECTRIC POWER CORPORATION) 13 September 2010 (2010-09-13) <br> See claims 1-4. | 1-15 |

| | |
|---|---|
| ☐ Further documents are listed in the continuation of Box C. | ☑ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2024** | **13 September 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/007375**

| Patent document cited in search report | | | Publication date (day/month/year) | Patent family member(s) | | | Publication date (day/month/year) |
|---|---|---|---|---|---|---|---|
| KR | 10-2023-0004852 | A | 06 January 2023 | AU | 2023-278379 | A1 | 05 January 2023 |
| | | | | CA | 3177915 | A1 | 02 December 2021 |
| | | | | EP | 4157603 | A1 | 05 April 2023 |
| | | | | US | 2023-0219261 | A1 | 13 July 2023 |
| | | | | WO | 2021-237306 | A1 | 02 December 2021 |
| KR | 10-2009-0117717 | A | 12 November 2009 | CN | 101605843 | A | 16 December 2009 |
| | | | | CN | 101605843 | B | 11 July 2012 |
| | | | | EP | 2121818 | A1 | 25 November 2009 |
| | | | | EP | 2121818 | B1 | 29 August 2012 |
| | | | | JP | 2010-517760 | A | 27 May 2010 |
| | | | | US | 2010-0048743 | A1 | 25 February 2010 |
| | | | | WO | 2008-097306 | A1 | 14 August 2008 |
| JP | 7215625 | B1 | 31 January 2023 | JP | 2023-172449 | A | 06 December 2023 |
| | | | | JP | 2023-172861 | A | 06 December 2023 |
| | | | | WO | 2023-228476 | A1 | 30 November 2023 |
| JP | 6879326 | B2 | 02 June 2021 | JP | 2019-123555 | A | 25 July 2019 |
| KR | 10-0981851 | B1 | 13 September 2010 | KR | 10-2010-0036062 | A | 07 April 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230081056